# EUROPEAN PATENT SPECIFICATION

(11) **EP 3 196 267 B1**
(45) Date of publication and mention of the grant of the patent: **29.07.2020**
(21) Application number: 15842048.9
(22) Date of filing: 18.09.2015
(51) Int. Cl.: C09J 175/04, C09J 11/06, C08G 18/40, C08G 18/48, C08K 5/06, C08G 18/28, C08K 5/00, C08K 5/29, C09J 7/20

(54) **URETHANE-BASED PRESSURE-SENSITIVE ADHESIVE**
URETHANBASIERTER HAFTKLEBER
ADHÉSIF À BASE D'URÉTHANNE SENSIBLE À LA PRESSION

(30) Priority: 19.09.2014 JP 2014190832
(43) Date of publication of application: 26.07.2017
(73) Proprietor: Cosmed Pharmaceutical Co., Ltd., Kyoto-shi, Kyoto 601-8014 (JP)
(72) Inventor: QUAN, Ying-shu, Kyoto-shi Kyoto 601-8014 (JP); HASEGAWA, Junya, Kyoto-shi Kyoto 601-8014 (JP); KAMIYAMA, Fumio, Kyoto-shi Kyoto 601-8014 (JP)
(74) Representative: Ter Meer Steinmeister & Partner
(86) International application number: PCT/JP2015/076598
(87) International publication number: WO 2016/043300

(56) References cited:
- JP-A- H07 310 066
- JP-A- 2003 129 022
- JP-A- 2003 183 615
- JP-A- 2004 010 804
- JP-A- 2011 190 420
- JP-A- 2014 522 259
- US-A- 5 183 664
- DATABASE WPI Week 200023 Thomson Scientific, London, GB; AN 2000-266800 XP002777533, & JP 2000 073040 A (TOYO INK MFG CO LTD) 7 March 2000 (2000-03-07)

## Description

### Technical Field

The present invention relates to a novel urethane-based adhesive composition suitable for using as a pasting agent to the skin.

### Background Art

Urethane-based adhesives mean the adhesives having urethane groups (-NCHCOO-), which are known to be allowed to exhibit various physical properties by adding additives. Urethane-based adhesives are more hydrophilic than rubber-based adhesives and acrylic adhesives, and are gentle to the skin. However, their adhesiveness has been rather unsuitable as adhesives for pasting agents to the skin compared to acrylic adhesives.

Generally, urethane-based adhesives are produced by reacting polyester polyol or polyether polyol with polyvalent isocyanate, or are composed of polyurethane polyol. The urethane-based adhesives produced by only an urethanization reaction with polyol and diisocyanate have a weak adhesiveness. Although the attempts have been executed to increase adhesive force of urethane-based adhesives, it was difficult to successfully improve their adhesive force to the extent required to use for skin application because their repeelability is generally inadequate due to their poor cohesiveness.

Until now, some urethane-based adhesives have been already published, including a urethane-based adhesive with improved water absorbency and enhanced perspiration resistance (Patent Document 1), an organic solvent-free aqueous urethane-based adhesive (Patent Document 2), a urethane-based adhesives in which a hydrophilic oil solution such as polyhydric alcohol is contained to reduce cutaneous irritation (Patent Document 3), a urethane-based adhesive in which fatty acid ester is contained to improve adherence and bubble releasability (Patent Document 4).
Patent Document 5 discloses a polyurethane pressure-sensitive adhesive composition which comprises a polyurethane polyol and a polyisocyanate. Patent Document 6 discloses a hydrophilic polyurethane pressure sensitive adhesive layer with moisture vapor transmission present on a polyurethane film. Patent Document 7 discloses a hydrophilic polyurethane polyol adhesive layer present on a thermoplastic polyurethane film. Patent Document 8 discloses a polyurethane pressure sensitive adhesive layer being coated onto a polyurethane film.

### Prior art documents

### Patent Documents

[Patent Document 1] JP-A-Hei-5-178741
[Patent Document 2] JP-A 2000-328031
[Patent Document 3] JP-A 2005-58288
[Patent Document 4] JP-A 2011-190420
[Patent Document 5] JP 2000 073040 A
[Patent Document 6] US 5 183 664 A
[Patent Document 7] US 5 591 820 A
[Patent Document 8] US 2012/0283615 A

### Summary of Invention

### Technical Problem

The problem to be solved by the invention consists in providing the urethane-based adhesive with improved adhesiveness while maintaining its gentleness to the skin.

### Solution to Problem

The urethane-based adhesive composition of the invention contains a urethane-based adhesive, a curing agent and a hydrophilic plasticizing agent as essential components, wherein a composition ratio of the urethane-based adhesive, the curing agent and the solid content is, based on 100 parts by mass of solid content of the urethane-based adhesive, 0.5 to 15 parts by mass of the solid content of the curing agent and 10 to 80 parts by mass of the solid content of the hydrophilic plasticizing agent.

A urethane-based adhesive that can be suitably used in the present invention includes urethane-based adhesives composed of polyester polyol and polyether polyol, urethane-based adhesives composed of urethane urea resins, and urethane-based adhesives composed of polyurethane polyol.

Particularly preferred are urethane-based adhesives composed of polyurethane polyol as urethane-based adhesives.

The urethane-based adhesives composed of polyurethane polyol used suitably in the urethane-based adhesive of the present invention contain polyurethane polyol as a main agent mixed with a curing agent containing polyfunctional isocyanates, wherein the polyurethane polyol is crosslinked with the polyfunctional isocyanate in the curing agent. Crosslinking with the polyfunctional isocyanate curing agent in the urethane-based adhesive provides the urethane-based adhesive for the skin which is gentle to the skin and also has improved adhesive force.

The polyfunctional isocyanates which can be used in the curing agent may be the same as the polyfunctional isocyanates used to produce polyurethane polyol.

A polyfunctional isocyanate is used as the curing agent. Polyfunctional isocyanates including linear compounds such as hexamethylene diisocyanate, adducts and isocyanurates are suitably used.

Crosslinking density of the urethane-based adhesive can be appropriately controlled by varying the blending amount of the curing agent, thereby the adhesiveness adjusted.

The added amount of the polyfunctional isocyanates in the curing agent with respect to the polyurethane polyol as a base compound should be 0.5 to 15 parts by mass (solid content), and is preferably 1.0 to 10 parts by mass (solid content) and more preferably 3.0 to 8 parts by mass (solid content), based on 100 parts by mass of solid content of the polyurethane polyol.

A hydrophilic plasticizing agent is added in order to plasticize the urethane-based adhesive and improve its adhesive force and peel property. The hydrophilic plasticizing agent is a hydrophilic high-boiling point liquid which is compatibilized with urethane to provide a plasticizing effect, and preferably has one or more hydroxyl groups or oxyethylene groups, or both of them in a molecule. Note that "high-boiling point" means a boiling point above 150 °C at normal pressures.

The hydrophilic plasticizing agent is further preferably a hydrophilic high-boiling point liquid having a long-chain hydrocarbon group in addition to one or more hydroxyl groups or oxyethylene groups, or both of them in the molecule. The long-chain hydrocarbon means a hydrocarbon having 10 or more carbons. Preferable hydrophilic plasticizing agents include, for example, octyldodecyl lactate, isostearyl glycolate, polyoxyethylene cetyl ether, polyoxyethylene lauryl ether, oleyl cetyl ether and the like.

The hydrophilic plasticizing agent is added in 10 to 80 parts by mass (solid content) and preferably 15 to 60 parts by mass (solid content), based on 100 parts by mass of solid content of the urethane-based adhesive. The composition containing less amount of the hydrophilic plasticizing agent cannot exert a strong adhesiveness enough to serve as the adhesive composition. Addition of too much amount of the hydrophilic plasticizing agent results in excess plasticization occurred, leading to lack of cohesive force and adhesive deposit caused.

Adding more amount of the hydrophilic plasticizing agent to the urethane-based adhesive, it may become too soft due to excess plasticization and thus possibly not exert a sufficient cohesive force. In such a case, increasing the additive amount of the curing agent to the adhesive to increase the degree of crosslinking allows it to maintain its softness and also sufficient cohesive force.

In addition of the urethane-based adhesive, the curing agent and the hydrophilic plasticizing agent, the other additives such as a tackifier, an antioxidant, an ultraviolet absorber, an inorganic filler and a wetting agent may be further added to the adhesive composition depending on the purpose.

The urethane-based adhesive, the curing agent and the hydrophilic plasticizing agent may be applied onto the flexible support film and then heat treated to obtain the urethane-based adhesive composition having adhesiveness. The urethane-based adhesive composition sheet is the urethane-based adhesive composition kept in a sheet form, which may be used as a pasting agent to the skin.

The flexible support film that may be used includes a polyethylene film, a polyester film, a polyurethane film and the like. Among others, the most preferred is the polyurethane film of 10 µm or less in thickness. That is because the polyurethane films have a high extensibility, gas permeability, water vapor permeability and thus make full use of the characteristics of the urethane-based adhesive of the invention.

An improved water vapor permeability is the prominent feature of the present invention. A urethane-based adhesive is hydrophilic, and has higher water vapor permeability than rubber-based adhesives and acrylic adhesives both of which are more hydrophobic. Mixing such a urethane-based adhesive with a hydrophilic plasticizing agent improves water vapor permeability even more as compared to the case of mixing with a hydrophobic plasticizing agent. Therefore the urethane-based adhesive composition sheet does not cause stuffiness even after application to the skin for a long period of time, which is an extraordinary characteristic as a skin adhesive. A quantitative evaluation for these is as shown in Examples.

To avoid producing redness and stuffy feeling even after the application to the skin for a long period of time (24 hours or more), the total thickness of the support film + the adhesive composition is desirably 15 to 60 µm. When the thickness is 15 µm or less, the adhesiveness to the skin tends to be poor. On the other hand, in the case of the thickness being 60 µm or more, water vapor permeability, which is a feature of the inventive product, is possibly reduced.

The urethane-based adhesive composition sheet of the invention can be produced by applying mixture of the urethane-based adhesive, the curing agent and the hydrophilic plasticizing agent or the like on a release film or a support film by hand-painting or using a coater, which is then cured by heating, followed by overlaying the support film or the release film on the surface of the urethane-based adhesive.

### Advantageous Effects of Invention

In addition to the urethane-based adhesive and the curing agent, the hydrophilic plasticizing agent can be added to obtain the urethane-based adhesive composition having an excellent adhesiveness, water vapor permeability and adhesive depositing property, and as a result, providing the improvement of the adhesiveness while maintaining gentleness to the skin.

### Detailed Description

Hereinafter the embodiments of the present invention will be illustrated with reference to Examples. However the present invention is not intended to be limited by those embodiments.

### Examples and Comparative Examples

A urethane-based adhesive, a curing agent and a hydrophilic plasticizing agent were mixed to obtain a transparent liquid. This mixture was applied onto a polyester release film of 30 µm in thickness such that the thickness of the adhesive layer was 25 µm, and then heated at 60 °C for 12 hours so as to crosslink some of polymer chains of the urethane adhesive resin and convert the mixture from a liquid to a soft resin-like material with adhesiveness (a urethane-based adhesive composition). Subsequently a urethane film (manufactured by CosMED Pharmaceutical Co. Ltd) as a support was laminated onto the urethane-based adhesive composition to transfer it to the urethane film. Thus a urethane-based adhesive composition sheet was obtained.

The physical property of the obtained urethane-based adhesive composition sheet was evaluated and its surface texture was observed. Samples with adhesive deposit remaining on the skin when peeling them after applying on the skin were excluded, and the adhesion property was evaluated by a ball tack test. The results were summarized in Table 1 (Examples) and Table 2 (Comparative Examples).

The ball tack test was performed to measure a ball tack value on a slope using the procedure in accordance with JIS Z 0237. The measured values were evaluated as follows: ball tack value of 6 or less represents weak adhesion; ball tack value of 7 represents moderate adhesion; and ball tack value of 8 or more represents strong adhesion. Samples exhibiting the adhesion property corresponding to the ball tack value of 7 or more are deemed to meet the purpose of the present study.

In Examples (Table 1) and Comparative Examples (Table 2) described below, CYABINE SP-205 (a medium adhesive type urethane-based adhesive: TOYO INK CO., LTD.) composed of polyurethane polyol was used as the urethane-based adhesive. In these tables, the used amount of solid content of each component other than the urethane-based adhesive is expressed in parts by mass based on 100 parts by mass of solid content of the urethane-based adhesive.

T501B (a polyfunctional isocyanate curing agent: TOYO INK CO., LTD.) or Sanpasuta HD739D (a polyfunctional isocyanate curing agent: VIGteQnos Corporation) was used as the curing agent. Note that Sanpasuta HD739D is known to contain silica and therefore undergo a crosslinking reaction smoothly even if the crosslinking system contains water.

Either of COSMOL 13 (octyldodecyl lactate: Nisshin OilliO Group, Ltd.), NOIGEN ET83 (polyoxyethylene lauryl ether: Dai-ichi Kogyo Seiyaku Co. Ltd.), NONION P-202 (polyoxyethylene cetyl ether: NOF CORPORATION) or polyethylene glycol 400 (NACALAI TESQUE, INC.) was used as the hydrophilic plasticizing agent.

To compare to the invention of Patent document 4, a hydrophobic plasticizing agent, a low molecular weight polyhydric alcohol was used instead of the hydrophilic plasticizing agent in some Comparative Examples. IPM (isopropyl myristate: Wako Pure Chemical Industries, Ltd.) or IPP (isopropyl palmitate: Wako Pure Chemical Industries, Ltd.) was used as the hydrophobic plasticizing agent. Glycerin (NACALAI TESQUE, INC.) was used as the low molecular weight polyhydric alcohol.

**Table 1**

| Examples | urethane-based adhesive (part by weight) | curing agent (part by weight) | | plasticizing agent, polyhydric alcohol (part by weight) | adhesive deposit | adhesiveness |
|---|---|---|---|---|---|---|
| 1 | SP-205 (100) | T501B | (3) | COSMOL 13 (15) | absent | moderate adhesiveness |
| 2 | | T501B | (5) | COSMOL 13 (40) | absent | strong adhesiveness |
| 3 | | T501B | (8) | COSMOL 13 (60) | absent | strong adhesiveness |
| 4 | | T501B | (9) | NOIGEN ET83 (30) | absent | strong adhesiveness |
| 5 | | HD739D | (10) | NONION P202 (30) | absent | strong adhesiveness |
| 6 | | HD739D | (10) | polyethylene glycol 400 (15) | absent | strong adhesiveness |
| 7 | | HD739D | (2) | NONION P202 (30) | absent | moderate adhesiveness |

**Table 2**

| Comparative Examples | urethane-based adhesive (part by weight) | curing agent (part by weight) | plasticizing agent (part by weight) | adhesive deposit | adhesiveness |
|---|---|---|---|---|---|
| 1 | SP-205 (100) | T501B (20) | COSMOL 13 (60) | absent | weak adhesiveness |
| 2 | | T501B (3) | COSMOL 13 (3) | absent | weak adhesiveness |
| 3 | | T501B (10) | COSMOL 13 (8) | absent | weak adhesiveness |
| 4 | | T501B (3) | IPM (15) | absent | weak adhesiveness |
| 5 | | T501B (6) | IPM (30) | absent | weak adhesiveness |
| 6 | | HD739D (3) | IPP (30) | absent | weak adhesiveness |
| 7 | | HD739D (5) | IPP (8) | absent | weak adhesiveness |
| 8 | | T501B (0.3) | COSMOL 13 (40) | present | - |
| 9 | | T501B (15) | NOIGEN ET83 (100) | present | - |
| 10 | | T501B (10) | glycerin (40) | present | - |

Comparative Example 8 caused adhesive deposit because it contained too little amount of the curing agent. Comparative Examples 9 also caused adhesive deposit because it contained slightly too much amount of the curing agent and furthermore too much amount of the hydrophilic plasticizing agent.

In the invention of Patent document 4, a fatty acid ester having 10 to 30 carbons such as isostearyl laurate and isopropyl myristate is added instead of the hydrophilic plasticizing agent used in the present invention. Comparative Examples 4, 5, 6 and 7, which are similar to the invention of Patent document 4, have poor adhesion, as shown in Table 2. Thus, the urethane-based adhesive composition for the skin which is gentler to the skin and exhibits stronger adhesibility can be obtained by using the hydrophilic plasticizing agent rather than by using the fatty acid ester.

### (Evaluation of permeating amount of the water vapor)

Five samples, Example 8 and Comparative Examples 11 to 15, were evaluated using the procedure in accordance with Testing Methods for Determination of the Water Vapor Transmission Rate of Moisture-Proof Packaging Materials (Dish Method) (JIS). Note that unwoven fabric (manufactured by Japan Vilene Company, Ltd., EW-9102) was used as a support to avoid any impact on the water vapor transmission rate of the adhesives. The adhesive had a thickness of 50 µm. In the Dish Method, the water vapor transmission amount was measured after left for 24 hours under the condition as follows: the opening area of the dish of 28.26 cm²; the amount of calcium chloride of 17 g; room temperature of 40 °C; and humidity of 75 %, and the results are shown in Table 3.

In the samples used in Table 3, MASCOS 10 is an acrylic adhesive (CosMED Pharmaceutical Co. Ltd). Also, an oil gel is produced by melt-kneading 30 parts by mass of styrene-isoprene-styrene block copolymer (Kraton D1163, manufactured by Kraton Polymer Japan), 60 parts by mass of liquid paraffin (NACALAI TESQUE, INC., chemical reagents) and 0.5 parts by mass of benzoyl hydroxytoluene (NACALAI TESQUE, INC., chemical reagents) at 140 °C followed by press-formation into a sheet of 50 µm in thickness.

**Table 3**

| Example Comparative Examples | urethane-based adhesive (part by weight) | curing agent (part by weight) | plasticizing agent (part by weight) | permeating amount of water vapor (g/m² · 24hr) |
|---|---|---|---|---|
| Example 8 | SP-205 (100) | T501B (5) | COSMOL 13 (40) | 3567 |
| Comparative Example 11 | | T501B (5) | IPP (40) | 2501 |
| Comparative Example 12 | | T501B (5) | absent | 1758 |
| Comparative Example 13 | MASCOS-10 | absent | absent | 453 |
| Comparative Example 14 | MASCOS-10 | HD739D (5) | COSMOL 13 (40) | 1762 |
| Comparative Example 15 | oil gel | absent | absent | 495 |

The urethane-based adhesive to which the hydrophilic plasticizing agent was added had a significantly high water vapor transmission amount compared to the oil gel-based adhesive and the acrylic adhesive.

## Claims

1. A urethane-based adhesive composition containing a urethane-based adhesive, a curing agent and a hydrophilic plasticizing agent as essential components, wherein
a composition ratio of the urethane-based adhesive, the curing agent and the solid content is, based on 100 parts by mass of solid content of the urethane-based adhesive, 0.5 to 15 parts by mass of the solid content of the curing agent and 10 to 80 parts by mass of the solid content of the hydrophilic plasticizing agent.

2. The urethane-based adhesive composition according to claim 1, wherein
the hydrophilic plasticizing agent is a high-boiling point liquid which has a hydroxyl groups and/or an oxyethylene group in a molecule, wherein high-boiling point means a boiling point above 150°C at normal pressures.

3. The urethane-based adhesive composition according to claim 2, wherein
the hydrophilic plasticizing agent is a liquid having a long-chain hydrocarbon group in addition to the hydroxyl group or the oxyethylene group, with a boiling point of 150 °C or more.

4. The urethane-based adhesive composition according to claim 2 or claim 3, wherein
the hydrophilic plasticizing agent is one or more hydrophilic plasticizing agents selected from a group consisting of octyldodecyl lactate, isostearyl glycolate, polyoxyethylene cetyl ether, polyoxyethylene lauryl ether and oleyl cetyl ether.

5. The urethane-based adhesive composition according to claim 4, wherein
the hydrophilic plasticizing agent is octyldodecyl lactate.

6. A urethane-based adhesive composition sheet, wherein a urethane-based adhesive composition according to any of claims 1 to 5 is kept on a surface of a flexible film.

7. The urethane-based adhesive composition sheet according to claim 6, wherein the flexible film is a polyurethane film.

## Patentansprüche

1. Urethanbasierte Klebstoffzusammensetzung, enthaltend einen urethanbasierten Klebstoff, ein Härtungsmittel und ein hydrophiles Weichmachermittel als wesentliche Komponenten, wobei
ein Zusammensetzungsverhältnis des urethanbasierten Klebstoffs, des Härtungsmittels und der Feststoffgehalt, bezogen auf 100 Masseteile des Feststoffgehalts des urethanbasierten Klebstoffs, 0,5 bis 15 Masseteile des Feststoffgehalts des Härtungsmittels und 10 bis 80 Masseteile des Feststoffgehalts des hydrophilen Weichmachermittels beträgt.

2. Urethanbasierte Klebstoffzusammensetzung nach Anspruch 1, wobei das hydrophile Weichmachermittel eine Flüssigkeit mit hohem Siedepunkt ist, welche eine Hydroxylgruppe und/oder eine Oxyethylengruppe in einem Molekül aufweist, wobei hoher Siedepunkt ein Siedepunkt oberhalb 150 C° bei Normaldrucken bedeutet.

3. Urethanbasierte Klebstoffzusammensetzung nach Anspruch 2, wobei das hydrophile Weichmachermittel eine Flüssigkeit mit einer langkettigen Kohlenwasserstoffgruppe zusätzlich zu der Hydroxylgruppe oder der Oxyethylengruppe ist, mit einem Siedepunkt von 150 C° oder mehr.

4. Urethanbasierte Klebstoffzusammensetzung nach Anspruch 2 oder Anspruch 3, wobei das hydrophile Weichmachermittel ein oder mehrere hydrophile Weichmachermittel sind, gewählt aus einer Gruppe, bestehend aus Octyldodecyllactat, Isostearylglycolat, Polyoxyethylencetylether, Polyoxyethylenlaurylether und Oleylcetylether.

5. Urethanbasierte Klebstoffzusammensetzung nach Anspruch 4, wobei das hydrophile Weichmachermittel Octyldodecyllactat ist.

6. Folie aus einer urethanbasierten Klebstoffzusammensetzung, wobei eine urethanbasierte Klebstoffzusammensetzung nach irgendeinem der Ansprüche 1 bis 5 auf einer Oberfläche eines flexiblen Films gehalten wird.

7. Folie aus einer urethanbasierten Klebstoffzusammensetzung nach Anspruch 6, wobei der flexible Film ein Polyurethanfilm ist.

## Revendications

1. Composition adhésive à base d'uréthane contenant un adhésif à base d'uréthane, un agent de durcissement et un agent plastifiant hydrophile comme constituants essentiels, dans laquelle
un rapport de composition entre l'adhésif à base d'uréthane, l'agent de durcissement et la teneur en solides est, sur la base de 100 parties en masse de teneur en solides de l'adhésif à base d'uréthane, 0,5 à 15 parties en masse de la teneur en solides d'agent de durcissement et 10 à 80 parties en masse de la teneur en solides d'agent plastifiant hydrophile.

2. Composition adhésive à base d'uréthane selon la revendication 1, dans laquelle
l'agent plastifiant hydrophile est un liquide à point d'ébullition élevé qui possède un groupe hydroxyle et/ou un groupe oxyéthylène dans une molécule, où point d'ébullition élevé signifie un point d'ébullition supérieur à 150 °C à des pressions normales.

3. Composition adhésive à base d'uréthane selon la revendication 2, dans laquelle
l'agent plastifiant hydrophile est un liquide possédant un groupe hydrocarboné à longue chaîne en plus du groupe hydroxyle ou du groupe oxyéthylène, ayant un point d'ébullition de 150 °C ou plus.

4. Composition adhésive à base d'uréthane selon la revendication 2 ou la revendication 3, dans laquelle
l'agent plastifiant hydrophile est un ou plusieurs agents plastifiants hydrophiles choisis dans un groupe consistant en lactate d'octyldodécyle, glycolate d'isostéaryle, éther cétylique de polyoxyéthylène, éther laurique de polyoxyéthylène et éther cétylique d'oléyle.

5. Composition adhésive à base d'uréthane selon la revendication 4, dans laquelle
l'agent plastifiant hydrophile est le lactate d'octyldodécyle.

6. Feuille de composition adhésive à base d'uréthane, dans laquelle une composition adhésive à base d'uréthane selon l'une quelconque des revendications 1 à 5 est maintenue sur une surface d'un film flexible.

7. Feuille de composition adhésive à base d'uréthane selon la revendication 6, dans laquelle le film flexible est un film de polyuréthane.
